# EUROPEAN PATENT APPLICATION

(11) **EP 1 258 285 A1**
(43) Date of publication of application: **20.11.2002**
(21) Application number: 01201812.3
(22) Date of filing: 15.05.2001
(51) Int. Cl.: B01J 19/00

(54) **Use of an apparatus for performing multiple catalytic reactions at the same time**

(71) Applicant: DSM N.V., 6411 TE Heerlen (NL)
(72) Inventor: Schaffrath, Heike, 52064 Aken (DE); Sielcken, Otto Erik, 6136 BG Sittard (NL)

(57) **Abstract**

Use of an apparatus for performing a multiplicity of catalytic reactions at the same time containing
(1) a pressure-proof vessel,
(2) a cover for opening and closing the apparatus,
(3) a central gas supply,
(4) a pneumatic cylinder,
(5) needle assemblies,
(6) a stirring block,
(7) a heating block,
the heating block (7) contains holes (8) in which multiple single replaceable reaction vessels can be placed and means (9) for heating the reaction vessels, the stirring block (6) contains a number of magnets (10) as much as the number of possible replaceable reaction vessels, the magnets are welded to the block, each magnet is connected to a toothed weel (11) and the toothed weels are connected to a motor (12), the cover (2) contains a number of needle assemblies (13) as much as the number of possible replaceable reaction vessels, each needle assembly contains a needle (14) and a gas inlet port (15), a central gas supply (3) connecting the needle assemblies and providing gas in the reaction vessels via the needles and providing gas in the whole apparatus via a bypass (16) for pressure equalization, and a pneumatic cylinder (4) for opening and closing the cover.

## Description

The invention relates to the use of an apparatus for performing a multiplicity of catalytic reactions at the same time.

Such an apparatus is described in GB-A-2327754. This publication describes an argon glove-box containing 24 identical reaction cells for vials containing batches of iodobenzene, vinyltributyltin and Pd/ligand catalyst. The conversion of styrene is measured by gas chromatography.

A disadvantage of this apparatus is that it can not be applied for testing catalysts for a catalytic reaction at increased pressure and/or temperature.

The object of the invention is to provide an apparatus for performing multiply catalytic reactions at the same time at increased pressure and/or temperature.

This object is achieved in that the apparatus contains
(1) a pressure-proof vessel,
(2) a cover for opening and closing the apparatus,
(3) a central gas supply,
(4) a pneumatic cylinder,
(5) needle assemblies,
(6) a stirring block,
(7) a heating block,
   the heating block (7) contains holes (8) in which multiple single replaceable reaction vessels can be placed and means (9) for heating the reaction vessels, the stirring block (6) contains a number of magnets (10) as much as the number of possible replaceable reaction vessels, the magnets are welded to the block, each magnet is connected to a toothed weel (11) and the toothed weels are connected to a motor (12), the cover (2) contains a number of needle assemblies (13) as much as the number of possible replaceable reaction vessels, each needle assembly contains a needle (14) and a gas inlet port (15), a central gas supply (3) connecting the needle assemblies and providing gas in the reaction vessels via the needles and providing gas in the whole apparatus via a bypass (16) for pressure equalization, and a pneumatic cylinder (4) for opening and closing the cover.

It has been found that the apparatus of the invention can be used for performing multiple catalytic reactions at the same time at increased pressure (until 10 MPa) and increased temperature (until 240 °C). An advantage of the apparatus of the present invention is that the content of each single reaction vessel is effectively stirred. Another advantage is that different gasses can be applied in the reaction vessels and in the apparatus. Another advantage is that the magnets are durable for pressure and/or hydrogen can no migrate or enter.

It has also been found that the apparatus of the invention can be used for performing multiple catalytic reactions at the same time whereby stirring of the reaction medium is necessary. Examples of such reactions are homogeneous catalytic reactions, but also heterogeneous catalytic reactions in which the catalyst is present as a slurry.

Examples of catalytic reactions which can be performed in the apparatus are carbonylation, hydroformylation, hydrogenation, oxidation and cross-coupling.

The invention also relates to a method for operating the apparatus. The multiple reaction vessels are placed in a tray containing holes at positions identical to the positions of the holes in the heating block of the reactor. The reaction vessels are filled with reactants and the magnet outside the apparatus. The tray is placed into the opened apparatus such that all holes of the tray are positioned on the holes in the heating block. The cover containing the needle assemblies is lowered such that the needles are pressed into the septum of the reaction vessels. The cover is raised, thereby lifting the reaction vessels from the tray. The tray is removed from the reactor. The apparatus is closed, thereby moving the vessels into the heating block, the motor for stirring is switched on, gas is supplied in the reaction vessels via the needles and in the apparatus via a bypass and the reaction vessels are heated.

After the reactions have terminated, the reaction vessels are depressurised, removed from the apparatus by raising the cover, thereby lifting the reaction vessels from the heating block. The tray is placed into the opened apparatus such that all holes of the tray are positioned on the holes in the heating block. The cover is lowered such that the reaction vessels are placed in the holes of the tray. A combular plate is placed in to hold the reaction vessels. Then, the cover is raised such that the needles are removed from the reaction vessels and the tray containing the reaction vessels is removed from the apparatus.

The apparatus is preferably an autoclave with a cover at the upper end which can be securely closed during operation. An advantage of using an autoclave is that an autoclave contains a shielding which prevents that chemicals are exposed to the environment in case the reaction vessels break due to for example an accident. The autoclave is preferably locked by means of clamps sealed with EPDM rings. The autoclave is preferably squarely of shape and is preferably of stainless steel or Hastelloy or any other pressure proof material.

The cover contains needle assemblies. The number of the needle assemblies is the same as the number of holes in the heating block. Preferably the cover contains a number of rays of a number of needle assemblies. Each needle assembly essentially consists of a needle and a gas inlet port. The needles are preferably constructed of Hastelloy C.

In the apparatus of the invention commercially available, inexpensive septum sealed vials can be applied. This can be regarded as a major advantage because these vials are disposable. This is advantageous because it is not necessary to clean the vials for a subsequent use and there is no risk for contamination in subsequent reactions. The vial is preferably made of glass or a chemical and temperature resistant plastic. The septum on the vial is made of a material capable of being punctured by the needles and of resealing upon withdrawal of such needle. The septum is preferably made of a rubber material and more preferably of Teflon ™ coated rubber. The septum of the vial is sealed by a cap. The septum is not covered by the cap in the neighbourhood of the place where the needle is punctured into the septum. The cap is for example of aluminium or plastic. Preferably the cap is of aluminium.

The apparatus of the invention includes a heating block containing holes in which multiple single replaceable reaction vessels can be placed. The tray which is used for bringing the reaction vessels into and removing the reaction vessels from the apparatus also contains holes in which the multiple single reaction vessels can be placed. The number of the holes in the heating block is the same as the number of the holes in the tray. The dimensions of the heating block and the tray and the positions of the holes in the heating block and the tray are such that the holes of the heating block and the tray correspond with each other. Preferably, the tray and the heating block contain a number of rays of a number of holes. An advantage of using a tray is that the reaction vessels can be filled with reactants and a magnet outside the apparatus and that the reaction vessels can easily be transported.

The heating block contains means for heating the reaction vessels. The reaction vessels are heated using a common heating jacket. The jacket consist of a block with a number of cut-aways/holes that fit the reaction vessels with a close tolerance. Preferably, the heating block contains cups as much as there are holes for reaction vessels and heated oil is circulated around the cups through the interior of the heating jacket. It has been found that with the apparatus of the invention the reaction vessels can be heated without significant heating of the rest of the apparatus and uniform heating of the reaction vessels.

Magnetic stirring bars contained in each reaction vessel are used to agitate the reaction mixtures. Each stirring bar is effectively driven by a corresponding rotating magnet located just underneath the heating jacket. These rotating magnets are in turn driven by a common set of gears. The gears are driven by an electric motor through a magnetic coupling, thus isolating the pressure inside the autoclave from ambient pressure. Each reaction vessel contains a magnet. This magnet is rotated in the reaction vessel by the magnetic stirring bars.

## Claims

1. Use of an apparatus for performing a multiplicity of catalytic reactions at the same time containing
(1) a pressure-proof vessel,
(2) a cover for opening and closing the apparatus,
(3) a central gas supply,
(4) a pneumatic cylinder,
(5) needle assemblies,
(6) a stirring block,
(7) a heating block,
the heating block (7) contains holes (8) in which multiple single replaceable reaction vessels can be placed and means (9) for heating the reaction vessels,
the stirring block (6) contains a number of magnets (10) as much as the number of possible replaceable reaction vessels, the magnets are welded to the block, each magnet is connected to a toothed weel (11) and the toothed weels are connected to a motor (12),
the cover (2) contains a number of needle assemblies (13) as much as the number of possible replaceable reaction vessels, each needle assembly contains a needle (14) and a gas inlet port (15), a central gas supply (3) connecting the needle assemblies and providing gas in the reaction vessels via the needles and providing gas in the whole apparatus via a bypass (16) for pressure equalization, and a pneumatic cylinder (4) for opening and closing the cover.

2. Use of the apparatus according to claim 1, wherein the apparatus is an autoclave of stainless steel or Hastelloy or any other pressure proof material.

3. Use of the apparatus according to claim 2, wherein the autoclave has a square shape.

4. Use of the apparatus according to any one of claims 1-3, wherein each single replaceable reaction vessel contains a magnet.

5. Use of the apparatus according to any one of claims 1-4, wherein the reaction vessels are vials of glass sealed by a septum and a cap.

6. Use of the apparatus according to claim 5, wherein the septum is made of a material capable of being punctured by the needles and of resealing upon withdrawal of the needles.

7. Use of the apparatus according to claims 1-6, wherein the block contains a number of rays of a number of holes in which the replaceable reaction vessels can be placed.

8. Use of the apparatus according to any one of claims 2-7, wherein the motor is placed outside the autoclave.

9. Use of the apparatus according to any one of claims 1-8, wherein the means for heating the reaction vessel is heated oil.

10. Use of the apparatus according to any one of claims 1-9 for performing a multiplicity of catalytic reactions at the same time at increased pressure and/or temperature.

11. Use of the apparatus according to any one of claims 1-9 for performing a multiplicity of catalytic reactions at the same time whereby stirring of the reaction medium is necessary.

12. Use of the apparatus according to any one of claims 1-11, wherein the chemical reaction is a carbonylation, hydroformylation, hydrogenation, oxidation or cross-coupling reaction.

13. Use of the apparatus according to any one of claims 1-12, wherein the reaction vessels are placed in a tray containing holes at positions identical to the positions of the holes in the heating block, the reaction vessels are filled with reactants and the magnet outside the apparatus, the tray is placed into the opened apparatus such that all holes of the tray are positioned on the holes in the heating block, the cover containing the needle assemblies is lowered such that the needles are pressed into the septum of the reaction vessels, the cover is raised, thereby lifting the reaction vessels from the tray, the tray is removed from the reactor, the apparatus is closed, thereby moving the vessels into the heating block, the motor for stirring is switched on, gas is supplied in the reaction vessels via the needles and in the apparatus via a bypass and the reaction vessels are heated.

14. Use according to claim 13, wherein the reaction vessels are depressurised and removed from the apparatus by raising the cover, thereby lifting the reaction vessels from the heating block, placing the tray into the opened apparatus such that all holes of the tray are positioned on the holes in the heating block, the cover is lowered such that the reaction vessels are placed in the holes of the tray, a combular plate is placed in, the cover is raised such that the needles are removed from the reaction vessels and the tray containing the reaction vessels is removed from the apparatus.
